# EUROPÄISCHE PATENTSCHRIFT

(11) **EP 4 371 686 B1**
(45) Veröffentlichungstag und Bekanntmachung des Hinweises auf die Patenterteilung: **19.08.2026**
(21) Anmeldenummer: 23209073.8
(22) Anmeldetag: 10.11.2023
(51) Int. Cl.: B23D 31/00, B23D 21/00, B23D 21/06, F16L 15/00, F16L 5/00

(54) **KRAFTERZEUGER ZUM ERZEUGEN EINER LINEAREN DRUCKKRAFT**
FORCE GENERATOR FOR PRODUCING A LINEAR COMPRESSIVE FORCE
GÉNÉRATEUR DE FORCE POUR GÉNÉRER UNE FORCE DE PRESSION LINÉAIRE

(30) Priorität: 15.11.2022 DE 102022130171
(43) Veröffentlichungstag der Anmeldung: 22.05.2024
(73) Patentinhaber: Viega Technology GmbH & Co. KG, 57439 Attendorn (DE)
(72) Erfinder: Dasbach, Philipp, 57234 Wilnsdorf (DE); Goska, David, 57439 Attendorn (DE)
(74) Vertreter: Cohausz & Florack

(56) Entgegenhaltungen:
- WO-A1-02/096250
- WO-A1-2010/064591
- DE-A1- 102011 115 955

## Beschreibung

Die Erfindung betrifft einen Krafterzeuger zum Erzeugen einer linearen Druckkraft.

Pressmaschinen wie sie in der Sanitär- und Heizungsinstallation üblich sind, stellen eine definierte Kraft über einen definierten Hub zur Verfügung. In der Regel wird dieser Linearantrieb genutzt, um eine Pressbacke anzutreiben. Dabei wird über einen Kurvenantrieb einer Einlaufkontur die translatorische Bewegung in eine Zangenbewegung übersetzt. Jedoch sind sowohl die Richtung der Krafteinleitung als auch die zur Verfügung stehende Kraft nicht den Anforderungen jeder Anwendung entsprechend.

Eine Kraftübersetzung, ohne dabei die Bewegungsrichtung des Presswerkzeugs zu ändern, wird bspw. bei einem Presskraftübersetzer, auch Pressbooster genannt, umgesetzt. Beispielsweise wird der lineare Antrieb des Presskraftübersetzers genutzt, um direkt einen Zugdorn eines Einpressstutzens anzutreiben, wie er in der DE 10 2013 101 109 A1 beschrieben wird.

Weitere linear arbeitende Krafterzeuger sind aus der WO 02/096250 A1 und der DE 10 2011 115 955 A1 bekannt, bei denen die Antriebskraft und die Abtriebskraft in der gleichen Richtung verlaufen.

Eine weitere Anwendung einer hohen Druckkraft betrifft die Bearbeitung von Wandscheiben, die für Wasserleitungen zur Versorgung von Zapfstellen wie z. B. Wasserhähne oder dergleichen zwischen einer Wand und einer Vorwand eingesetzt werden.

Wandscheiben dienen dabei dazu, eine spätere Anschlussmöglichkeit für Armaturen, Ventile, Leitungen oder ähnlichen Komponenten zur Verfügung zu stellen. Die Wandscheibe wird an der bestehenden Wand befestigt und der Zulauf der Wandscheibe ist an eine Versorgungsleitung, zum Beispiel an eine Wasserleitung angeschlossen. An den in der Regel im rechten Winkel von der Wand wegweisenden Ablauf wird die zu versorgende Komponente wie eine Armatur angeschlossen, so dass das zu leitende Medium, beispielsweise Wasser, von der Versorgungsleitung in die Wandscheibe und von der Wandscheibe in die Komponente strömen kann. Während der Installation von Wasseranschlüssen können auch Wandscheiben mit einem langen Rohrabschnitt als Ablauf mit Gewinde eingesetzt werden, der während der Installation gekürzt wird. Das Kürzen des Rohrabschnittes kann dabei auch durch ein Abreißen eines vorderen Teils des Rohrabschnitts an vorgegebenen Sollbruchstellen erfolgen, wozu eine große Druck- bzw. Zugkraft bei kurzem Verstellweg notwendig ist.

Daher liegt der vorliegenden Erfindung das technische Problem zugrunde, eine hohe Druckkraft zur Verfügung zu stellen und dafür die die bekannten Pressmaschine mit Pressbacken zu nutzen.

Das zuvor aufgeführte technische Problem wird erfindungsgemäß durch einen Krafterzeuger zum Erzeugen einer linearen Druckkraft gemäß Anspruch 1 gelöst.

Insbesondere ist vorgesehen, dass der Antriebskeil im Wesentlichen senkrecht zur Schieberichtung des Abtriebskeils von einer Ausgangsposition in eine Endposition bewegbar ist und dass der Abtriebskeil und der Antriebskeil schräg zur Bewegungsrichtung des Antriebskeils und schräg zur Schieberichtung des Antriebskeils verlaufende Anlageflächen aufweisen. Durch eine Bewegung des Antriebskeils in das Gehäuse hinein wird der Abtriebskeil relativ aus dem Gehäuse heraus verschoben und es entsteht eine Relativbewegung zwischen dem Abtriebskeil und dem Gehäuse.

Alternativ oder zusätzlich kann vorgesehen sein, dass der Antriebskeil im Wesentlichen senkrecht zur Schieberichtung des Gehäuses von einer Ausgangsposition in eine Endposition bewegbar ist und dass das Gehäuse und der Antriebskeil schräg zur Bewegungsrichtung des Gehäuses und schräg zur Schieberichtung des Antriebskeils verlaufende Anlageflächen aufweisen. Bei dieser Ausgestaltung wird durch eine Bewegung des Antriebskeils in das Gehäuse hinein wird das Gehäuse relativ zum Abtriebskeil verschoben und es entsteht ebenfalls eine Relativbewegung zwischen dem Abtriebskeil und dem Gehäuse.

Dabei kann ein Winkel α zwischen der Schieberichtung des Antriebskeils und der schräg verlaufenden Anlagefläche weniger als 45°, insbesondere weniger als 20°, vorzugsweise weniger als 10° betragen. Besonders bevorzugt ist ein Winkelbereich von 2,5° bis 10°.

Der Begriff der linearen Druckkraft ist dabei auf die lineare Richtung der Druckkraft bezogen, der Druckkraftverlauf über den Pressablauf kann dagegen auch nicht-linear sein.

Für ein Ansetzen eines Presswerkzeugs mit bekannten Pressbackenhälften oder mit einer Gelenkzugbacke ist es weiter vorteilhaft, dass an der Außenseite des Gehäuses und an der Außenseite des Antriebskeils Ansetzflächen für Pressbackenhälften ausgebildet sind.

Durch den zuvor beschriebenen Keilantrieb wird die von der Pressmaschine und der Pressbacke ausgeübte Kraft durch die Ausbildung der Keilform übersetzt und die Zangenbewegung der Gelenkzugbacke wird in eine translatorische Bewegung umgesetzt. Durch die Steigung der schiefen Ebene des Keils, also durch die Einstellung eines geeigneten Winkels α wird die Übersetzung der Kräfte festgelegt.

Die von der Pressbacke ausgeübte Kraft, mit der der Antriebskeil in das Gehäuse gedrückt wird, wird im Gehäuse des Werkzeugs um 90° umgelenkt, was in vielen Anwendungen Vorteile bietet. Beispielsweise ist damit das oben erwähnte Abreißen eines Gewindeabschnitts eines Rohres einer Wandscheibe in einfacher Weise möglich. Ebenso kann der Krafterzeuger bei dem Einsetzen eines Einpressstutzens verwendet werden. Denn das beschriebene Werkzeug ermöglicht das Erzeugen einer hohen Druckkraft über einen kurzen Hub.

Eine weitere Ausgestaltung der beschriebenen Krafterzeuger besteht darin, dass die Anlageflächen mindestens zwei Abschnitte mit unterschiedlichen Winkeln zwischen der Schieberichtung des Antriebskeils und den schräg verlaufenden Abschnitten aufweisen. Somit können unterschiedlich große Kräfte innerhalb eines Hubs eingestellt und erreicht werden. Durch im Verlauf der Anlageflächen veränderliche Winkel werden abschnittsweise lineare Druckkräfte mit unterschiedlichen Größen erzeugt.

Der Antriebskeil kann unterschiedliche Querschnitte wie rechteckig oder rund aufweisen, wobei die zugeordnete Anlagefläche im Wesentlichen plan ist.

Um Reibverluste zu minimieren, können bei der Auslegung der Elemente reibungsarme Werkstoffkombinationen gewählt werden oder Schmierstoffe eingesetzt werden. Reibungsarme Werkstoffe sind bspw. Bronze oder Siliziumnitridkeramik. Zur Schmierung können eine Gleitlackbeschichtung oder Festschmierstoffe verwendet werden. Die Reibung kann beispielsweise auch bei Stahl-Stahl-Kombinationen durch eine Bronze-Zwischenlage minimiert werden.

Ein weiterer Vorteil des beschriebenen Krafterzeugers besteht darin, dass durch die Schnittstelle der Ansetzflächen des Krafterzeugers die Pressbacke erst später angesetzt und betätigt werden muss, so dass die Montage des kompakten Krafterzeugers mit Keilantrieb ohne Pressmaschine erfolgen kann. Die Pressmaschine wird nur zum Auslösen des Krafterzeugers angesetzt. Dieses getrennte Montieren und Demontieren der einzelnen Komponenten ermöglicht ein komfortables Arbeiten.

Die vorzugsweise als Kugelköpfe ausgebildeten Ansetzelemente der Pressbacke ermöglichen es dabei, das Presswerkzeug aus verschiedenen Winkeln bedienen, also ansetzen und betätigen zu können. Somit kann die Krafteinleitung aus verschiedenen Winkelpositionen erfolgen, so dass eine Schwenkbarkeit zwischen der Pressbacke und dem Krafterzeuger gegeben ist.

Das System aus dem beschriebenen Krafterzeuger, einer Pressbacke und einer Pressmaschine nutzt zwei Übersetzungen der Kraft. Zum einen wird durch die Pressmaschine eine erste Kraft bereitgestellt, die durch die Einlaufkontur der Pressbacke, auch Kurvenantrieb genannt, in die Schwenkkraft der Pressbackenhälften übersetzt. Diese Schwenkkraft wird dann durch den Keilantrieb des Krafterzeugers vom Antriebskeil auf die für die Anwendung erforderliche Druckkraft des Abtriebskeils übersetzt.

Des Weiteren können Federn vorgesehen sein, so dass der Antriebskeil und der Abtriebskeil nach dem Auslösen des Werkzeugs wieder in ihre Anfangspositionen zurückgesetzt werden. Aufgrund der hohen Selbsthemmung des Systems aufgrund der Haftreibung der Anlageflächen ist es vorteilhaft, wenn beide Keile einzeln zurückgesetzt werden.

Im Folgenden wird die Erfindung anhand von Ausführungsbeispielen mit Bezug auf die Zeichnung erläutert. In der Zeichnung zeigen
- Fig. 1: eine an einer Wand befestigte Wandscheibe,
- Fig. 2: die Wandscheibe aus Fig. 1 mit einer zusätzlichen Vorwand,
- Fig. 3: die Wandscheibe aus Fig. 2 mit einem eingeschraubten Werkzeug zum Kürzen des Ablaufs der Wandscheibe,
- Fig. 4: die Wandscheibe aus Fig. 3 mit abgetrenntem Abschnitt nach dem Kürzen,
- Fig. 5: die Wandscheibe aus Fig. 4 mit gekürztem Ablauf,
- Fig. 6: die Wandscheibe aus Fig. 5 mit einer montierten Armatur,
- Fig. 7: das Werkzeug zum Kürzen des Ablaufs der Wandscheibe aus Fig. 3 in einer vergrößerten Darstellung,
- Fig. 8: das Werkzeug nach Fig. 7 in einem ersten Querschnitt mit einem erfindungsgemäßen Krafterzeuger zum Erzeugen einer Verschiebekraft zum Auseinanderziehen der ersten Gewindestange und der zweiten Gewindestange,
- Fig. 9: den Krafterzeuger nach Fig. 8 in einem zweiten Querschnitt in einer Ausgangsposition,
- Fig. 10: den Krafterzeuger nach Fig. 9 in einer Endposition,
- Fig. 11: den Krafterzeuger nach den Fig. 8 und 9 in einer perspektivischen Seitenansicht mit angesetztem Presswerkzeug,
- Fig. 12: eine schematische Darstellung des Werkzeugs mit Krafterzeuger und angesetzter Pressbackenhälfte nach Fig. 10 mit den einwirkenden Kräften,
- Fig. 13: eine schematische Teilansicht eines weiteren Krafterzeugers und
- Fig. 14: eine schematische Teilansicht eines weiteren Krafterzeugers.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

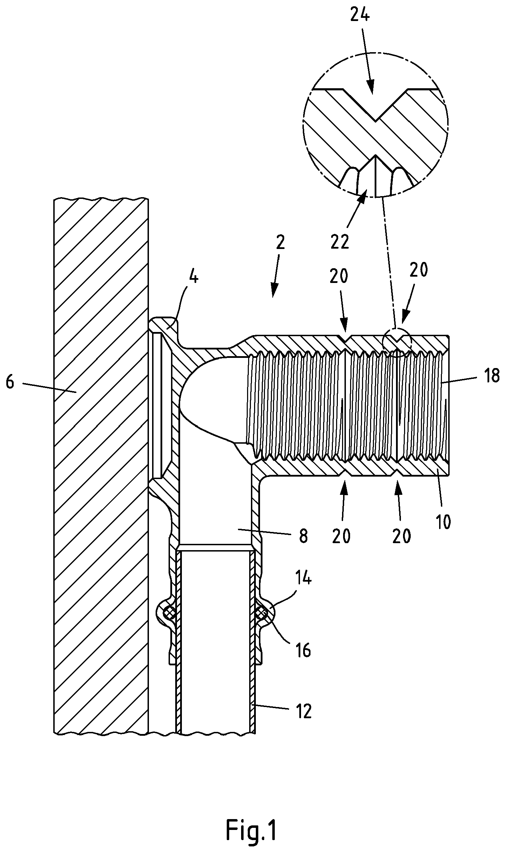

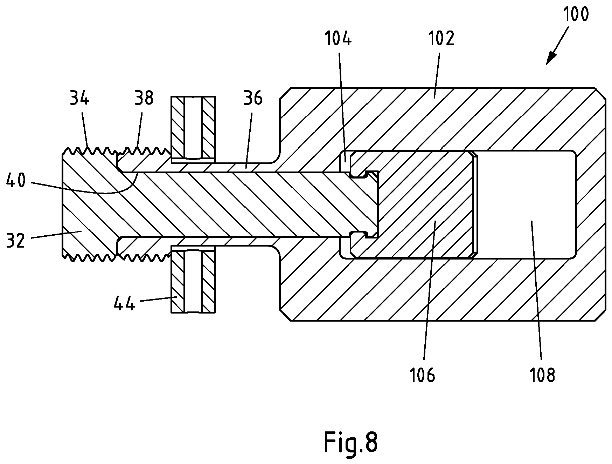

Im Folgenden wird zunächst anhand der Fig. 1 bis 7 eine Wandscheibe erläutert, deren Ablauf als mit einem Gewinde versehener Rohrabschnitt ausgebildet ist. Die Länge des Ablaufs wird durch Abreißen eines vorderen Teils des Rohrabschnitts verändert. Für das Abreißen ist eine große Druck- bzw. Zugkraft bei kleinem Verstellweg notwendig, für die ein erfindungsgemäßer Krafterzeuger eingesetzt werden kann. Ein solcher Krafterzeuger ist dann in den Fig. 8 bis 12 dargestellt.

Fig. 1 zeigt zunächst eine Wandscheibe 2 für den Anschluss einer mit Wasser zu versorgenden Komponente. Die Wandscheibe 2 weist einen Befestigungsflansch 4 für das Anbringen an einer Wand 6 auf und verbindet fluidtechnisch einen Zulauf 8 mit einem Ablauf 10 zur Verbindung mit der zu versorgenden Komponente. Der Zulauf 8 ist mit einer Versorgungsleitung 12 mittels eines Pressfittings 14 und eines O-Rings 16 verbunden und dient im Allgemeinen zum Leiten von Wasser. Selbstverständlich kann auch jedes andere Fluid mit der Wandscheibe geführt werden.

Der Ablauf 10 ist als Rohrabschnitt mit einem Gewinde 18 ausgebildet, das als Innengewinde ausgebildet ist und das zum Einschrauben eines Gewindeabschnitts mit Außengewinde der zu versorgenden Komponente dient.

Wie Fig. 1 zeigt, weist der Ablauf 10 an zwei axialen Positionen eine umlaufende Vertiefung 20 als Sollbruchstelle auf. Die Sollbruchstellen 20 werden durch eine innen ausgebildete Nut 22 und durch eine außen ausgebildete Nut 24 gebildet.

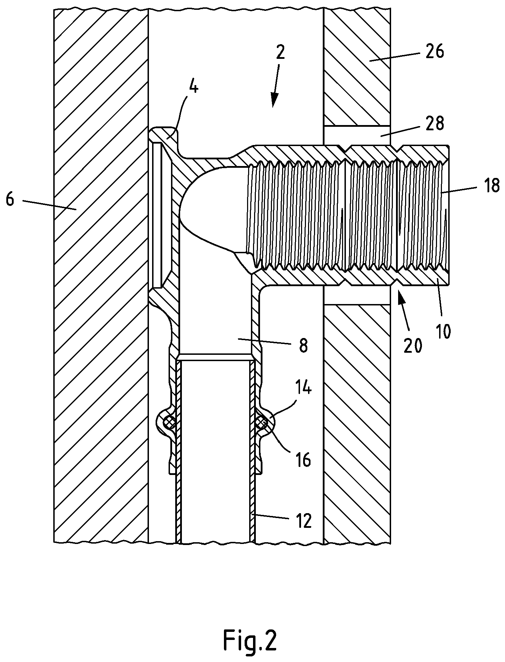

Fig. 2 zeigt die Ausbildung einer Vorwand 26, die mit Abstand zur Wand 6 installiert worden ist, wobei der Ablauf 10 durch eine Öffnung 28 hervorsteht.

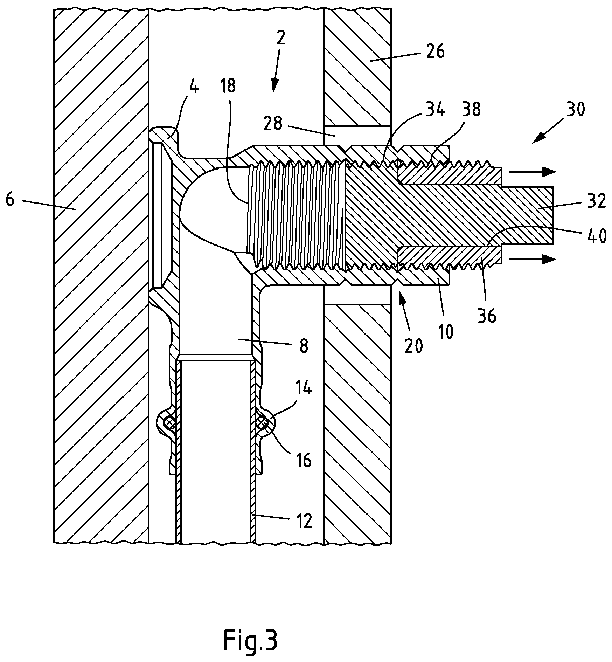

Fig. 3 zeigt weiterhin ein Werkzeug 30 zum Kürzen des Ablaufs 10 einer Wandscheibe 2 nach den Fig. 1 und 2. Das Werkzeug 30 weist eine erste Gewindestange 32 mit einem ersten Gewindeabschnitt 34 und eine zweite Gewindestange 36 mit einem zweiten Gewindeabschnitt 38 auf. Weiterhin weist die zweite Gewindestange 36 eine Bohrung 40 zur Aufnahme der ersten Gewindestange 32 auf und die erste Gewindestange 32 und die zweite Gewindestange 36 sind axial gegeneinander verschiebbar.

In einer ersten Position der Gewindestangen 32 und 36 gemäß Fig. 3 sind der erste Gewindeabschnitt 34 und der zweite Gewindeabschnitt 38 benachbart und fluchtend zueinander angeordnet, damit beide Gewindeabschnitte 34 und 38 nacheinander in das gleiche Gewinde 18 eingeschraubt werden können. In der ersten Position liegen die beiden Gewindeabschnitte 34 und 38 aneinander an.

Die Gewindestangen 32 und 36 sind dabei so weit in das Gewinde 18 des Ablaufs 10 eingeschraubt, dass sich der Gewindeabschnitt 34 proximal der Sollbruchstelle 20 und sich der Gewindeabschnitt 38 distal von der Sollbruchstelle 20 befindet. Die Berührungsstelle zwischen den beiden Gewindeabschnitten 34 und 38 befindet sich somit im Bereich der Sollbruchstelle 20.

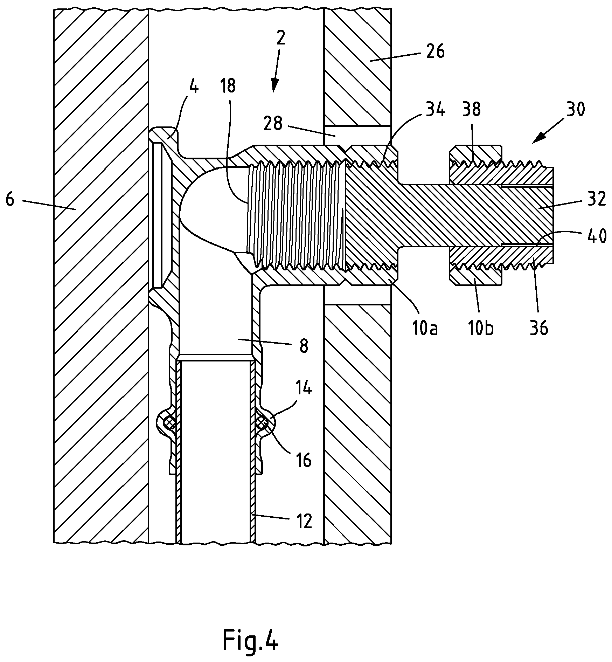

Ausgehend von der ersten Position werden die erste Gewindestange 32 und die zweite Gewindestange 36 auseinander bewegt, wie es durch die beiden Pfeile angedeutet ist. Die zweite Gewindestange 36 wird gegenüber der ersten Gewindestange 32 herausgezogen und in eine zweite Position gebracht, wie sie in Fig. 4 gezeigt ist. Durch das Auseinanderziehen der beiden Gewindestangen 32 und 36 wird der Rohrabschnitt des Ablaufs 10 an einer umlaufenden Sollbruchstelle 20 aufgetrennt bzw. abgerissen, so dass ein gekürzter Ablauf 10a entsteht und das abgerissene Teil 10b mit der zweiten Gewindestange 26 entfernt werden kann.

Fig. 4 zeigt also die zweite Position der Gewindestangen 32 und 36, in der der erste Gewindeabschnitt 34 und der zweite Gewindeabschnitt 38 auseinander gezogen und beabstandet zueinander angeordnet sind.

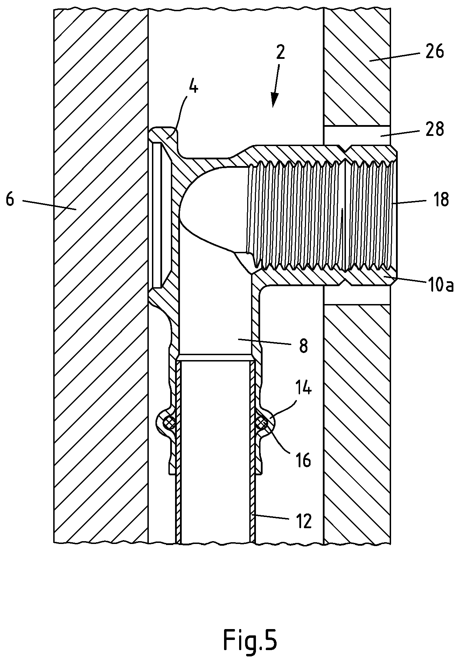

Fig. 5 zeigt die Wandscheibe 2 nach dem Entfernen des abgetrennten Teil 10b und Entfernen des Werkzeugs 30. Das vordere Ende des Ablaufs 10 ragt nur wenig aus der Öffnung 28 hervor, die Wandscheibe 2 ist also an die Bautiefe der Vorwand 26 angepasst worden.

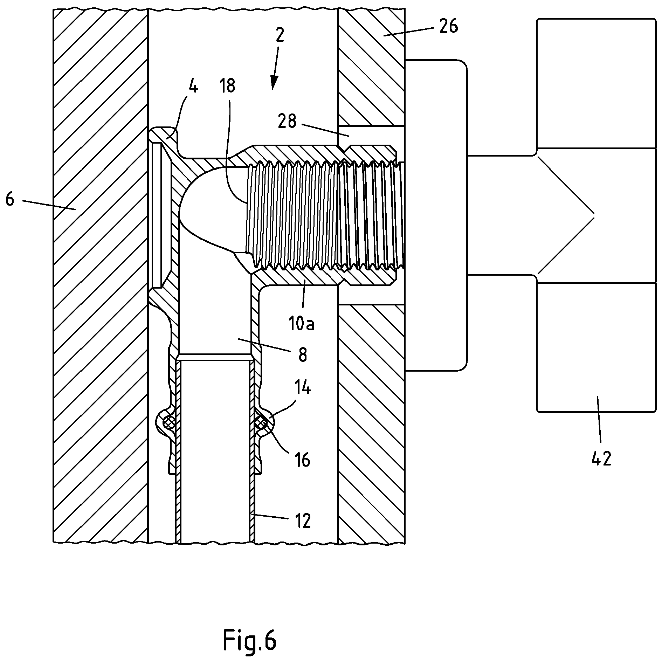

Fig. 6 zeigt schließlich die fertig montierte und angepasste Wandscheibe 2 mit einer angebrachten Komponente in Form eines Wasserhahns 42, der ausgehend von der Versorgungsleitung 12 über den Zulauf 8 und den Ablauf 10 mit Wasser versorgt wird.

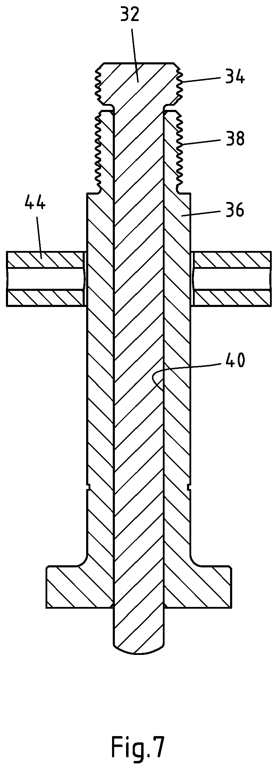

Fig. 7 zeigt das zuvor beschriebene Werkzeug 30 mit der ersten Gewindestange 32 und der zweiten Gewindestange 36 im Querschnitt. Zusätzlich zu der vorigen Darstellung ist ein Anschlagelement 44 vorgesehen, das verschiebbar auf der Außenseite der zweiten Gewindestange 36 befestigt ist. Mittels einer (nicht dargestellten) Befestigungsschraube kann das Anschlagelement 44 positioniert und fixiert werden. Mit dem Anschlagelement 44 kann die Tiefe vorgegeben werden, wie weit die erste Gewindestange 32 und die zweite Gewindestange 36 in das Gewinde 18 eingeschraubt werden sollen, um das Aufreißen einer der Sollbruchstellen 20 zu gewährleisten. Eine weitere Möglichkeit besteht darin, dass die Fixierung des Anschlagelements 44 über eine Rastfunktion mittels federndem Druckstück und einer entsprechenden Vertiefung zum Eingreifen des Druckstücks erfolgt.

In den Fig. 8 bis 10 ist ein Werkzeug 30 mit der ersten Gewindestange als erstes Druckelement 32, mit der zweiten Gewindestange als zweites Druckelement 36 und dem Anschlagelement 44 dargestellt.

Weiterhin ist ein erfindungsgemäßer Krafterzeuger 100 zum Erzeugen einer linearen Druckkraft dargestellt, mit einem Gehäuse 102, mit einem in dem Gehäuse 102 verschiebbar angeordneten Abtriebskeil 106 und mit einem Antriebskeil zum Übertragen einer von außen ausgeübten Presskraft in eine lineare Bewegung des Abtriebskeils relativ zum Gehäuse 102, wobei der Abtriebskeil mit einem ersten Druckelement verbunden ist, wobei das Gehäuse 102 mit einem zweiten Druckelement 36 verbunden ist, und wobei eine auf den Antriebskeil 108 ausgeübte Kraft ein Verschieben des ersten Druckelements 32 gegenüber dem zweiten Druckelement 36 bewirkt.

Somit erzeugt der Krafterzeuger 100 eine Verschiebekraft zum Auseinanderziehen der ersten Gewindestange 32 und der zweiten Gewindestange 36.

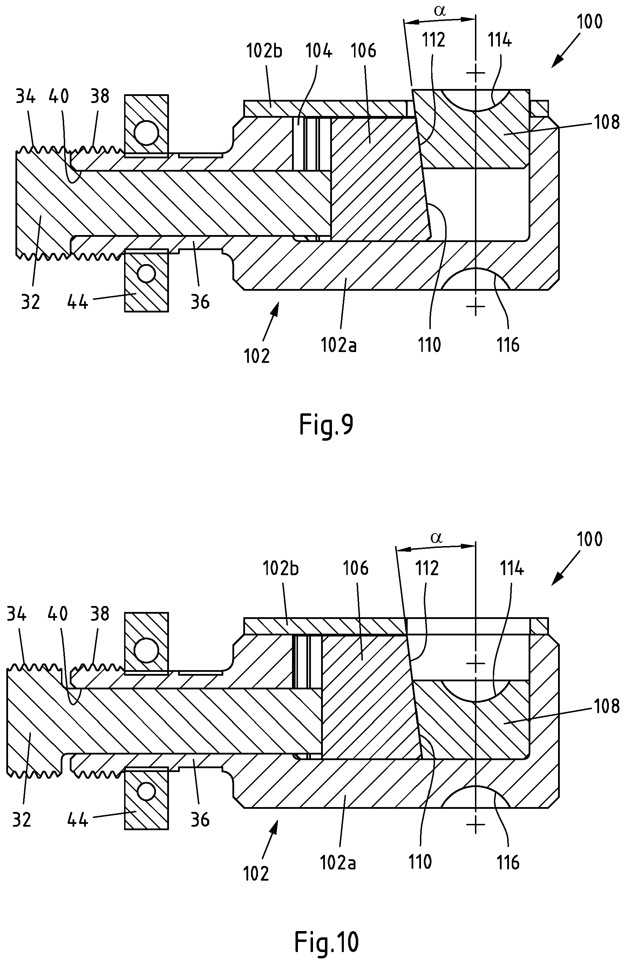

In den Fig. 8 wird ein Querschnitt dargestellt, in dem der Antriebskeil 106 bei einer Anwendung der Presskraft den Antriebskeil 106 senkrecht zur Zeichenebene bewegt wird. Die Fig. 9 und 10 zeigen einen Querschnitt in einer Ansicht senkrecht zur in Fig. 8 dargestellten Ansicht. Somit bewegt sich der Antriebskeil 106 bei Anwendung einer Presskraft von oben nach unten und somit im Wesentlichen senkrecht zur Schieberichtung des Abtriebskeils 106 von einer Ausgangsposition (Fig. 9) in eine Endposition (Fig. 10) bewegbar ist.

Dazu weisen der Abtriebskeil 106 und der Antriebskeil 108 schräg zur Bewegungsrichtung des Abtriebskeils 106 und schräg zur Schieberichtung des Antriebskeils 108 verlaufende Anlageflächen 110 und 112 auf. Dabei beträgt ein Winkel α zwischen der Schieberichtung des Antriebskeils 108 und der schräg verlaufenden Anlagefläche 112 weniger als 20°, vorzugsweise weniger als 10° beträgt.

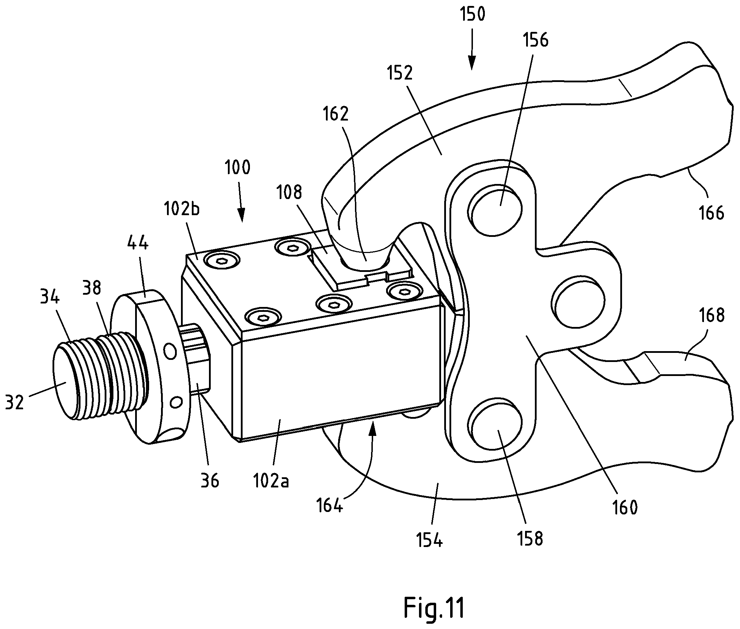

Für ein Ansetzen einer Pressbacke (siehe unten Fig. 11) weisen die beiden Seiten des Antriebskeils 108 rund ausgebildete Ansetzflächen 114 und 116 auf. Zudem besteht das Gehäuse 102 aus einem topfartigen Teil 102a und einem Deckel 102b. In bevorzugter Weise ist zudem eine Vorspanungsfeder (nicht dargestellt) für eine Rückstellung des Antriebskeils 108 in die Ausgangsposition vorgesehen.

Die von dem Antriebskeil 108 auf den Abtriebskeil 106 ausgeübte Kraft führt zu einem Verschieben des Abtriebskeils 106 relativ zum Gehäuse 102. Das wiederum führt zu einer Relativbewegung zwischen der ersten Gewindestange 32, die mit dem Abtriebskeil 106 verbunden ist, und der zweiten Gewindestange 36, die mit dem Gehäuse verbunden ist. In Fig. 10 sind die beiden Enden der Gewindeabschnitte 34 und 38 beabstandet dargestellt.

Bei der oben beschriebenen Anwendung des Werkzeugs 100 mit einer ortsfesten Wandscheibe 2 wird also das Gehäuse 102 zusammen mit der zweiten Gewindestange 36 von der Wandscheibe 2 entfernt und die erste Gewindestange 32 bleibt ortsfest mit der Wandscheibe 2 verbunden, wie es oben beschrieben worden ist. Die durch den Abtriebskeil 106 übertragene Kraft führt somit zu einem Abreißen des Gewindes 18 des Ablaufs 10 an der Sollbruchstelle 20.

Fig. 11 zeigt den beschriebenen Krafterzeuger 100 in einer perspektivischen Darstellung mit einer angesetzten Pressbacke 150, die zwei Pressbackenhälften 152 und 154 aufweist. Die Pressbackenhälften 152 und 154 sind mittels Gelenken 156 und 158 an einer Halterung 160 befestigt und weisen am vorderen Ende Ansetzelemente 162 und 164 auf. Die Ansetzelemente 162 und 164 weisen eine kalottenartige runde Form auf, die den Ansetzflächen 114 und 116 des Antriebskeils 108 entsprechen. Durch die runde Form können die Pressbackenhälften 152 und 154 in unterschiedlichen Winkeln an dem Antriebskeil 108 angesetzt und dann betätigt werden.

Eine Betätigung der Pressbacke 150 erfolgt durch eine nicht dargestellte, an sich bekannte Pressmaschine, die hydraulisch oder elektromotorisch einen Kolben vorschieben kann, in Fig. 11 von rechts nach links. Am Ende des Kolbens sind zwei Rollen angebracht, die an Innenseiten 166 und 168 einer sogenannten Einlaufkontur abrollen und somit die Pressbackenhälften 152 und 154 beim Vorschub des Kolbens auseinanderdrücken. Das Auseinanderdrücken führt zu einem Zusammendrücken der Ansetzelemente 162 und 164, wodurch die Presskraft auf den Antriebskeil 108 ausgeübt wird.

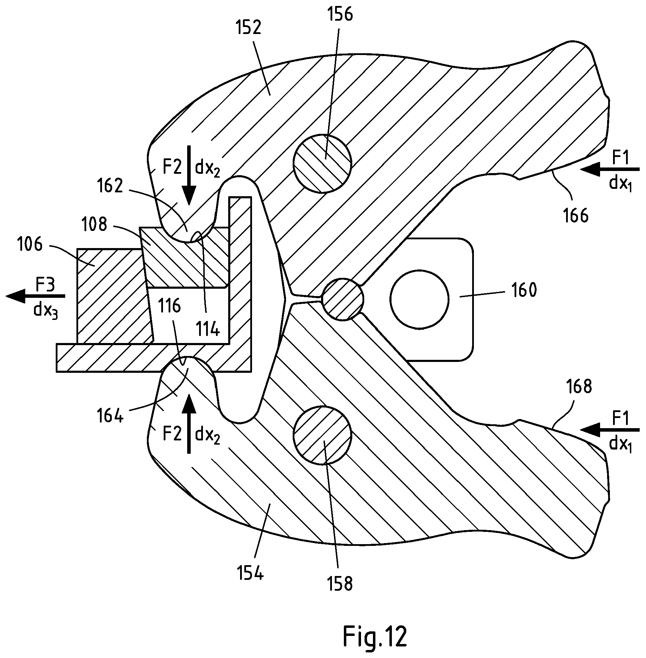

Fig. 12 zeigt schematisch die ausgeübten Kräfte bei der zuvor beschriebenen Anordnung. Der (nicht dargestellte) Kolben bewegt sich um eine Distanz dx1 von rechts nach links und übt eine horizontal wirkende Kraft F1 (siehe Pfeile) aus, die zu einem Verschwenken der Pressbackenhälften 152 und 154 führt. Durch die Schwenkbewegung wird eine in Fig. 11 senkrecht mit einem Pfeil dargestellte Kraft F2 erzeugt, während sich das Ansetzelement 162 um eine Distanz dx2 bewegt. Dabei ist dx2 kleiner als dx1und die Kraft F2 ist größer als F1.

Durch die schräg verlaufenden Flächen 110 und 112 wird die Bewegung des Antriebskeils 108 auf den Abtriebskeil 106 übertragen, wobei die Flächen 110 und 112 übereinander gleiten. Dabei wird abhängig vom vorgegebenen Winkel α die auf den Antriebskeil 108 ausgeübte Presskraft als Kraft F3 auf den Abtriebskeil 106 verstärkt übertragen, so dass F3 größer als F2 ist. Zudem ist die Größe der Verschiebung dx3 des Abtriebskeils 106 kleiner als die Größe der Verstellung dx2 des Antriebskeils 108.

Der beschriebene Krafterzeuger 100 ermöglicht also eine Kraftübersetzung durch den Antriebskeil 108 ausgehend von einer kleineren Kraft, die über einen größeren Verstellweg einer Pressbacke auf den Antriebskeil 108 übertragen wird, in einen betragsmäßig kleineren Schiebeweg bei einer betragsmäßig größeren Schiebekraft. Diese Kraftübersetzung ist insbesondere bei dem beschriebenen Abtrennen eines Teils eines Rohrabschnitts vorteilhaft, da es hierbei um eine große Kraftausübung bei lediglich kurzem Verstellweg ankommt.

Die in Fig. 12 dargestellten Pfeile sind nicht maßstabsgetreu, sondern geben lediglich die Bewegungsrichtung und Krafteinleitung wieder. In Abhängigkeit von der Dimensionierung der einzelnen Bauteile kann ein Übersetzungsverhältnis für F1:F3 von 1:2 bis 1:30 oder mehr erreicht werden.

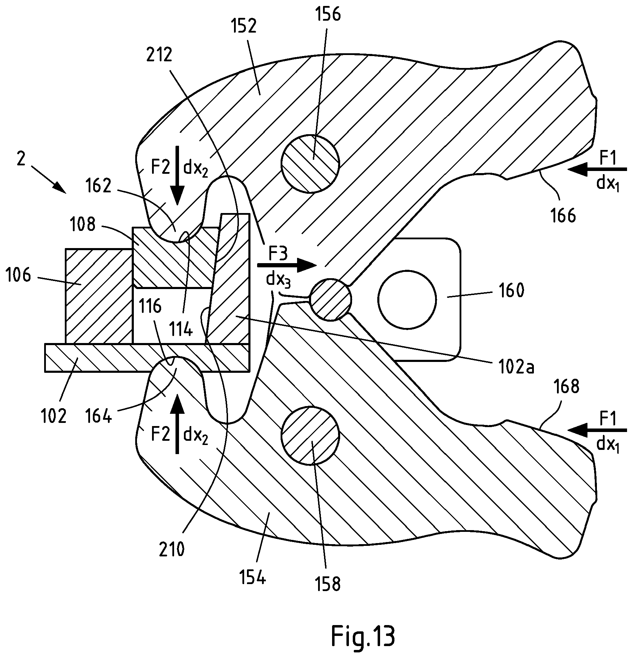

Fig. 13 zeigt eine schematische Teilansicht eines weiteren Ausführungsbeispiels eines Krafterzeugers 2, bei dem der Antriebskeil 108 - wie zuvor beschrieben - im Wesentlichen senkrecht zur Schieberichtung des Gehäuses 102 von einer Ausgangsposition in eine Endposition bewegbar ist. Im Gegensatz zum vorigen Ausführungsbeispiel weisen das Gehäuse 102 mit dem Gehäuseabschnitt 102a und der Antriebskeil 108 schräg zur Bewegungsrichtung des Gehäuses 102 und schräg zur Schieberichtung des Antriebskeils 108 verlaufende Anlageflächen 210 und 212 auf.

Somit wird die Kraft F2, die die Bewegung des Antriebskeils 108 in Fig. 13 nach unten bewirkt, in eine in Fig. 13 horizontale Kraft F3 - in Fig. 13 nach rechts wirkend - umgewandelt und der Gehäuseabschnitt 102a wird in Fig. 13 nach rechts verschoben. Der Abtriebskeil 106 wird dabei relativ zum Antriebskeil 108 und relativ zum unteren Teil des Gehäuses 102 nicht verschoben.

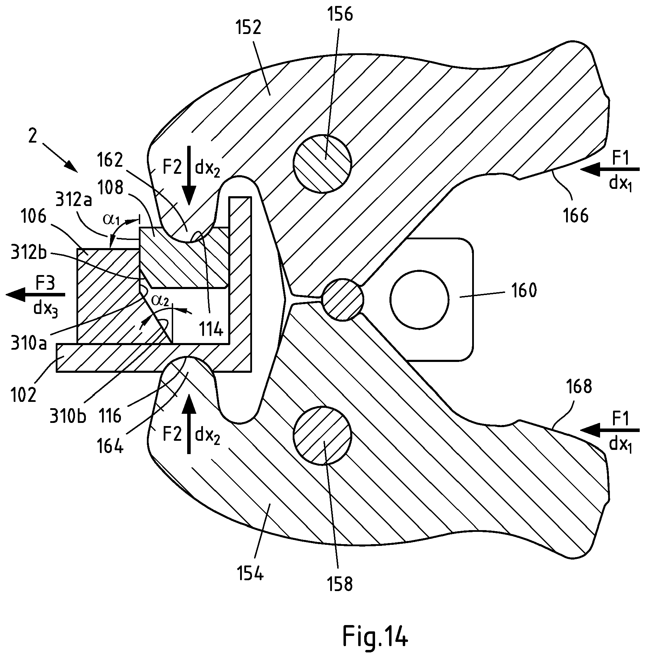

In Fig. 14 ist eine weitere Ausgestaltung des Krafterzeugers 2 gezeigt. bei der die Anlageflächen 310 und 312 mindestens zwei Abschnitte 310 mit unterschiedlichen Winkeln α₁ und α₂ zwischen der Schieberichtung des Antriebskeils 108 und den schräg verlaufenden Abschnitten 310a, 312a und 312a, 312b aufweisen.

Der Winkel α₁ ist im dargestellten Ausführungsbeispiel kleiner als der Winkel α₂ ausgebildet und beträgt weniger als 20°, während der Winkel α₂ entsprechend größer ist und bevorzugt in einem Bereich zwischen 20° und 45° liegt. Die Winkel α₁ kann aber auch größer als der Winkel α₂ gewählt werden.

## Patentansprüche

1. Krafterzeuger zum Erzeugen einer linearen Druckkraft,
- mit einem Gehäuse (102),
**dadurch gekennzeichnet,**
- **dass** ein in dem Gehäuse (102) verschiebbar angeordneter Abtriebskeil (106) vorgesehen ist,
- **dass** ein Antriebskeil (108) zum Übertragen einer von außen ausgeübten Presskraft in eine lineare Bewegung des Abtriebskeils (106) relativ zum Gehäuse (102) vorgesehen ist,
- **dass** der Abtriebskeil (106) mit einem ersten Druckelement (32) verbunden ist,
- **dass** das Gehäuse (102) mit einem zweiten Druckelement (36) verbunden ist, und
- **dass** eine auf den Antriebskeil (108) ausgeübte Kraft ein Verschieben des ersten Druckelements (32) gegenüber dem zweiten Druckelement (36) bewirkt.

2. Krafterzeuger nach Anspruch 1,
**dadurch gekennzeichnet,**
- **dass** der Antriebskeil (108) im Wesentlichen senkrecht zur Schieberichtung des Abtriebskeils (106) von einer Ausgangsposition in eine Endposition bewegbar ist und
- **dass** der Abtriebskeil (106) und der Antriebskeil (108) schräg zur Bewegungsrichtung des Antriebskeils (106) und schräg zur Schieberichtung des Antriebskeils (108) verlaufende Anlageflächen (110, 112) aufweisen.

3. Krafterzeuger nach Anspruch 1 oder 2,
**dadurch gekennzeichnet,**
- **dass** der Antriebskeil (108) im Wesentlichen senkrecht zur Schieberichtung des Gehäuses (102) von einer Ausgangsposition in eine Endposition bewegbar ist und
- **dass** das Gehäuse (102) und der Antriebskeil (108) schräg zur Bewegungsrichtung des Gehäuses (102) und schräg zur Schieberichtung des Antriebskeils (108) verlaufende Anlageflächen (210, 212) aufweisen.

4. Krafterzeuger nach Anspruch 2 oder 3,
**dadurch gekennzeichnet,**
**dass** ein Winkel (α) zwischen der Schieberichtung des Antriebskeils (108) und der schräg verlaufenden Anlagefläche (112 bzw. 212) weniger als 45°, insbesondere weniger als 20°, vorzugsweise weniger als 10° beträgt.

5. Krafterzeuger nach einem der Ansprüche 1 bis 4,
**dadurch gekennzeichnet,**
**dass** die Anlageflächen (310, 312) mindestens zwei Abschnitte (310a, 312a; 312a, 312b) mit unterschiedlichen Winkeln (α₁, α₂) zwischen der Schieberichtung des Antriebskeils (108) und den schräg verlaufenden Abschnitten (310a, 312a; 312a, 312b) aufweisen.

6. Krafterzeuger nach einem der Ansprüche 1 bis 5,
**dadurch gekennzeichnet,**
**dass** an der Außenseite des Gehäuses (102) und an der Außenseite des Antriebskeils (108) Ansetzflächen (114, 116; 214, 216) für Pressbackenhälften ausgebildet sind.

## Claims

1. Force generator for generating a linear compressive force,
- comprising a housing (102),
**characterized**
- **in that** an output wedge (106) is provided which is arranged displaceably in the housing (102),
- **in that** a drive wedge (108) for transmitting an externally applied pressing force into a linear movement of the output wedge (106) relative to the housing (102) is provided,
- **in that** the output wedge (106) is connected to a first pressure element (32),
- **in that** the housing (102) is connected to a second pressure element (36), and
- **in that** a force exerted on the drive wedge (108) causes a displacement of the first pressure element (32) relative to the second pressure element (36).

2. Force generator according to claim 1,
**characterized**
- **in that** the drive wedge (108) is movable substantially perpendicular to the sliding direction of the output wedge (106) from an initial position into an end position, and
- **in that** the output wedge (106) and the drive wedge (108) have contact surfaces (110, 112) extending obliquely to the direction of movement of the drive wedge (106) and obliquely to the sliding direction of the drive wedge (108).

3. Force generator according to claim 1 or 2,
**characterized**
- **in that** the drive wedge (108) is movable substantially perpendicular to the sliding direction of the housing (102) from an initial position into an end position, and
- **in that** the housing (102) and the drive wedge (108) have contact surfaces (210, 212) extending obliquely to the direction of movement of the housing (102) and obliquely to the sliding direction of the drive wedge (108).

4. Force generator according to claim 2 or 3,
**characterized**
**in that** an angle (α) between the sliding direction of the drive wedge (108) and the obliquely extending contact surface (112 or 212) is less than 45°, in particular less than 20°, preferably less than 10°.

5. Force generator according to any one of claims 1 to 4,
**characterized**
**in that** the contact surfaces (310, 312) have at least two sections (310a, 312a; 312a, 312b) with different angles (α₁, α₂) between the sliding direction of the drive wedge (108) and the obliquely extending sections (310a, 312a; 312a, 312b).

6. Force generator according to any one of claims 1 to 5,
**characterized in that**
engagement surfaces (114, 116; 214, 216) for press jaw halves are formed on the outer side of the housing (102) and on the outer side of the drive wedge (108).

## Revendications

1. Générateur de force pour générer une force de compression linéaire,
- avec un boîtier (102),
**caractérisé en ce que**
- il est prévu un coin de sortie (106) disposé de manière mobile dans le boîtier (102),
- il est prévu un coin d'entraînement (108) pour transmettre une force de pression exercée de l'extérieur en un mouvement linéaire du coin de sortie (106) par rapport au boîtier (102),
- le coin de sortie (106) est relié à un premier élément de pression (32),
- le boîtier (102) est relié à un deuxième élément de pression (36), et
- une force exercée sur le coin d'entraînement (108) provoque le déplacement du premier élément de pression (32) par rapport au deuxième élément de pression (36).

2. Générateur de force selon la revendication 1,
**caractérisé en ce que**
- le coin d'entraînement (108) peut être déplacé sensiblement perpendiculairement à la direction de coulissement du coin de sortie (106) d'une position de départ à une position finale et
- le coin de sortie (106) et le coin d'entraînement (108) présentent des surfaces d'appui (110, 112) qui s'étendent obliquement par rapport à la direction de coulissement du coin d'entraînement (106) et obliquement par rapport à la direction de coulissement du coin d'entraînement (108).

3. Générateur de force selon la revendication 1 ou 2,
**caractérisé en ce que**
- le coin d'entraînement (108) peut être déplacé sensiblement perpendiculairement à la direction de coulissement du boîtier (102) d'une position de départ à une position finale et
- le boîtier (102) et le coin d'entraînement (108) présentent des surfaces d'appui (210, 212) qui s'étendent obliquement par rapport à la direction de coulissement du boîtier (102) et obliquement par rapport à la direction de coulissement du coin d'entraînement (108).

4. Générateur de force selon la revendication 2 ou 3,
**caractérisé en ce que**
un angle (α) entre la direction de coulissement du coin d'entraînement (108) et la surface d'appui s'étendant obliquement (112 ou 212) est inférieur à 45°, en particulier inférieur à 20°, de préférence inférieur à 10°.

5. Générateur de force selon l'une des revendications 1 à 4,
**caractérisé en ce que**
les surfaces d'appui (310, 312) présentent au moins deux sections (310a, 312a ; 312a, 312b) avec des angles (α₁, α₂) différents entre la direction de coulissement du coin d'entraînement (108) et les sections s'étendant obliquement (310a, 312a ; 312a, 312b).

6. Générateur de force selon l'une des revendications 1 à 5,
**caractérisé en ce que**
à l'extérieur du boîtier (102) et à l'extérieur du coin d'entraînement (108), des surfaces de pose (114, 116; 214, 216) sont formées pour les moitiés de mâchoires de pressage.
